# EUROPÄISCHE PATENTSCHRIFT

(11) **EP 3 670 276 B1**
(45) Veröffentlichungstag und Bekanntmachung des Hinweises auf die Patenterteilung: **11.08.2021**
(21) Anmeldenummer: 19211710.9
(22) Anmeldetag: 27.11.2019
(51) Int. Cl.: B60S 3/00, B60S 3/06, B60L 53/30

(54) **SERVICESTATION FÜR EINE AUTONOME FAHRZEUGREINIGUNG**
SERVICE STATION FOR AUTONOMOUS VEHICLE CLEANING
STATION DE SERVICE POUR UN NETTOYAGE AUTONOME DE VÉHICULES

(30) Priorität: 20.12.2018 DE 102018222649
(43) Veröffentlichungstag der Anmeldung: 24.06.2020
(73) Patentinhaber: Volkswagen AG, 38440 Wolfsburg (DE)
(72) Erfinder: Kleinemas, Eva-Maria, 33415 Verl (DE); Röhl, Henrik, 38116 Braunschweig (DE); Petershagen, Frank, 30625 Hannover (DE); Schmitz, Phillip, 38102 Braunschweig (DE); Grobe, Sebastian, 38116 Braunschweig (DE); Weißbrich, Kira, 38108 Braunschweig (DE); Otremba, Dr. Maik, 38118 Braunschweig (DE)

(56) Entgegenhaltungen:
- DE-A1-102016 009 585
- US-A1- 2017 121 019
- US-A1- 2018 126 960
- US-A1- 2018 345 918
- US-B1- 10 112 585

## Beschreibung

Die Erfindung betrifft eine Servicestation für eine autonome Fahrzeugreinigung, insbesondere zur Reinigung eines autonomen Fahrzeugs. Die Erfindung betrifft ferner ein Verfahren einer erfindungsgemäßen Servicestation zum autonomen Reinigen eines Fahrzeugs.

Die Dokumente US 2018/345918 A1, US 10 112 585 B1 und US 2018/126960 A1 offenbaren Servicestationen zum autonomen Reinigen eines Fahrzeugs.

Heutige Fahrzeuge verfügen bereits über eine Vielzahl von Assistenzsystemen, die den Fahrer in einer Vielzahl von Fahrsituationen computerbasiert unterstützen. Solche Assistenzsysteme können auf Sensoren zum Erfassen einer Vielzahl von Messdaten zurückgreifen, welche die Sinnesfähigkeiten des Menschen bei weitem übersteigen. Zudem übertrifft die Geschwindigkeit dieser Assistenzsysteme die menschliche Reaktionszeit signifikant. Bekannte Fahrerassistenzsysteme sind beispielsweise Spurhalteassistenten, Bremsassistenten bei Fußgängererkennung und Abstandsregeltempomaten, insbesondere für Stausituationen.

Durch Anwendung solcher Assistenzsysteme geht die Autonomie des Fahrers bezüglich seiner Fahrentscheidungen zunehmend auf das Fahrzeug beziehungsweise in diesem operierende Steuereinheiten über. Am Ende dieser Entwicklungen steht ein autonom fahrendes Fahrzeug, welches vollständig ohne Eingriffe eines Menschen manövrieren kann. Mittels eines solchen autonom fahrenden Fahrzeugs ist ein vollautomatisierter Personentransport möglich. Bislang sind derartige autonom fahrenden Fahrzeuge in der Regel auf Einzelpersonen zugelassen und/oder besitzen ohne zusätzliche Überwachung durch einen Fahrer keine Straßenzulassung. Hinsichtlich von Wartung und Pflege unterscheiden sich diese autonom fahrenden Fahrzeuge somit wenig von anderen in Privatbesitz befindlichen Fahrzeugen. In der Regel werden sich der oder die Eigentümer um die Instandhaltung und Pflege des Fahrzeugs kümmern.

Bereits heutzutage existieren jedoch verschiedenste Mobilitätskonzepte, insbesondere in urbanen Ballungsräumen. Beim sogenannten Carsharing greifen dabei eine Vielzahl von Nutzern unabhängig voneinander und zeitlich begrenzt auf die Fahrzeuge einer Fahrzeugflotte zu. Indem die Flottenfahrzeuge nur für den Zeitraum der tatsächlichen Nutzung an einen bestimmten Nutzer gebunden sind, kann die ungenutzte Parkzeit der Fahrzeuge minimiert werden. Bei dezentralen Carsharing-Konzepten wird die Fahrzeugnutzung an beliebigen Punkten in einem Betriebsbereich des Flottenanbieters begonnen und beendet. Insbesondere dezentrale Carsharing-Konzepte haben das Potential die Anzahl der insgesamt benötigten Fahrzeuge deutlich zu minimieren, da ab einer ausreichenden Anzahl von Nutzern und Fahrzeugen die Flottenfahrzeuge in selbstorganisierter Weise und mit einer ausreichenden Dichte im Betriebsbereich zur Verfügung stehen werden. Sobald in einem bestimmten Bereich eine ausreichende Zahl autonom fahrender Fahrzeuge verfügbar sind, ist mit einer Zunahme von Carsharing-Konzepten und einer Abnahme von ausschließlich privat genutzten autonomen Fahrzeugen zu rechnen, da die Bereitstellung von autonomen Fahrzeugen auch an entlegeneren oder weniger frequentierten Orten sichergestellt werden kann.

Insbesondere bei dezentralen Carsharing-Konzepten stellt jedoch die Energieversorgung, Wartung und Pflege der Fahrzeuge eine Herausforderung dar. Zum einen können zum Betanken und Reinigen der Flottenfahrzeuge Angestellte des Flottenanbieters genutzt werden. Dies erhöht jedoch die Personalkosten und somit die Kosten des Carsharing-Konzepts signifikant. Alternativ können die Nutzer der autonomen Fahrzeuge durch entsprechende Incentives dazu veranlasst werden, jeweils notwendige Servicefahrten durchzuführen. Hierbei besteht jedoch das Risiko einer unzureichenden Wartung oder von Ausfällen der Fahrzeuge.

Im Rahmen der vorliegenden Anmeldung wird unter Carsharing im Weiteren Sinne auch Ride-Pooling und Ride-Hailing verstanden. Eine autonome Fahrzeugflotte kann somit auch eine Flotte von Privatfahrzeugen sein, die nur zeitweise für Fahrdienstleistungen, insbesondere für autonome Fahrdienstleistungen, zur Verfügung gestellt werden. In diesen und gleichartigen Fällen ist unter einem Flottenbetreiber der Anbieter einer Anwendung zu verstehen, wobei die Anwendung zum Verbinden von Nutzern und Anbietern von Fahrdienstleistungen genutzt wird.

Über die die Betriebsfähigkeit der Einzelfahrzeug hinaus ist es ferner erforderlich, die Funktionalität der Flotte zu erhalten. Insbesondere die dezentralen Carsharing-Konzepte erfordern zu jeder Zeit eine bestimmte Mindestanzahl einsatzbereiter Fahrzeuge. Nur so kann eine ausreichende Verfügbarkeit von Fahrzeugen für die Nutzer sichergestellt werden.

Der Erfindung liegt nun die Aufgabe zugrunde, die Probleme des Standes der Technik zu überwinden oder zumindest zu verringern und Lösungen für eine automatisierte Reinigung von Fahrzeugen zur Verfügung zu stellen, insbesondere für die Reinigung von autonomen Fahrzeugen, die in Carsharing-Konzepten oder von Einzelpersonen genutzt werden. Die erfindungsgemäße Aufgabe wird gelöst durch eine Servicestation und ein Verfahren gemäß den unabhängigen Patentansprüchen sowie den bevorzugte Weiterbildungen der Unteransprüche.

Ein erster Aspekt der vorliegenden Erfindung betrifft eine Servicestation zum autonomen Reinigen eines Fahrzeugs, insbesondere eines autonomen Fahrzeugs. Hierzu weist die Servicestation zumindest ein zum autonomen Durchführen einer Innenreinigung an dem Fahrzeug ausgebildetes erstes Servicemodul auf. Das Servicemodul ist besonders bevorzugt als Roboter ausgebildet oder weist Robotik auf, wie im Folgenden im Detail beschrieben. Die Servicestation weist ferner ein zum Durchführen einer Außenreinigung des Fahrzeugs ausgebildetes zweites Servicemodul auf. Das zweite Servicemodul ist bevorzugt wie eine aus dem Stand der Technik bekannte automatische Waschstraße ausgebildet. Somit ist die Servicestation vorteilhaft zum autonomen Durchführen einer Fahrzeugreinigung ausgebildet.

Die erfindungsgemäße Servicestation weist ferner ein den Servicemodulen vorgelagertes erstes Kontrollmodul auf. Das erste Kontrollmodul weist dabei zumindest einen dritten Sensor auf, der zum Erfassen zumindest einer einen Verschmutzungsgrad des Fahrzeugs charakterisierenden Größe ausgebildet ist. Mit anderen Worten ist das erste Kontrollmodul dazu ausgebildet (eingerichtet), einen Verschmutzungsgrad des Fahrzeugs zu detektieren. Somit können anhand von mit dem ersten Kontrollmodul erfassten Daten vorteilhaft ein Verschmutzungsgrad des Fahrzeugs und anhand dessen eine durchzuführende Reinigung bestimmt werden.

Die erfindungsgemäße Servicestation weist ferner ein den Servicemodulen nachgelagertes zweites Kontrollmodul auf. Das zweite Kontrollmodul weist dabei zumindest einen vierten Sensor auf, der zum Erfassen zumindest einer den Verschmutzungsgrad des Fahrzeugs charakterisierenden Größe ausgebildet ist. Mit anderen Worten ist das zweite Kontrollmodul ebenfalls dazu ausgebildet, einen Verschmutzungsgrad des Fahrzeugs zu detektieren. Somit kann anhand von mit dem zweiten Kontrollmodul erfassten Daten vorteilhaft eine Qualität beziehungsweise ein Effektivitätsmaß einer vorab durchgeführten Reinigung bestimmt werden. Beispielsweise kann ein mit dem zweiten Kontrollmodul erfasster Ist-Zustand einer Verschmutzung des Fahrzeugs mit einem mit dem ersten Kontrollmodul erfassten Ist-Zustand einer Verschmutzung oder mit einem in der ermittelten und durchgeführten Reinigung angestrebten Soll-Zustand der Reinheit des Fahrzeugs verglichen werden.

Die erfindungsgemäße Servicestation erlaubt somit vorteilhaft das Durchführen einer autonomen Reinigung an einem Fahrzeug, wobei vorteilhaft alle für die Reinigung notwendigen Informationen unmittelbar in der Servicestation erfasst werden können. Ein Fahrzeug muss somit lediglich die Servicestation anfahren, insbesondere autonom anfahren, um dort eine bedarfsgerechte Reinigung zu erhalten. Ferner erlaubt die erfindungsgemäße Servicestation eine Überprüfung und/oder eine Qualitätskontrolle der durchgeführten Reinigung.

Bei dem ersten Servicemodul handelt es sich bevorzugt um einen Roboterarm, der zur Innenraumreinigung des Fahrzeugs geeignete Werkzeuge trägt. Der Roboterarm ist bevorzugt durch eine geöffnete Tür oder ein geöffnetes Fenster des Fahrzeugs in den Fahrzeuginnenraum einführbar. Bei den Werkzeugen handelt es sich besonders bevorzugt um eine Staubsaugerdüse, eine Polsterbürste, einen Applikator zum Auftrag von Reinigungsmittel und/oder Mittel zur Ablagen- und/oder Scheibenreinigung. In einer alternativ bevorzugten Ausführungsform weist das erste Servicemodul einen mobilen Reinigungsroboter auf, der dazu ausgebildet ist, durch eine geöffnete Tür oder ein geöffnetes Fenster des Fahrzeugs in einen Fahrzeuginnenraum einzudringen. Der mobile Reinigungsroboter weist ferner bevorzugt zur Innenraumreinigung geeignete Werkzeuge, wie besonders bevorzugt eine Staubsaugerdüse, eine Polsterbürste, einen Applikator zum Auftrag von Reinigungsmittel und/oder Mittel zur Ablagen- und/oder Scheibenreinigung auf. Der mobile Reinigungsroboter ist dazu ausgebildet eine autonome Innenraumreinigung bei geschlossenen Türen und Fenstern durchführen.

Das zweite Servicemodul ist bevorzugt wie eine aus dem Stand der Technik bekannte automatische Waschstraße ausgebildet und weist bevorzugt zumindest einen Applikator zum Auftrag von zumindest einer Reinigungsflüssigkeit, rotierende Bürsten und/oder an schwenkbaren Lappenträgern befestigte Lappen zum Abtrag von Schmutz von dem Fahrzeug und/oder einen Fön zum Trocknen des Fahrzeugs auf. Besonders bevorzugt weist das zweite Servicemodul darüber hinaus weitere Waschelemente, wie beispielsweise speziell zur Felgenwäsche ausgebildete Bürsten, und/oder Mittel zum Wachsauftrag, auf. Bevorzugt weist das zweite Servicemodul ferner Mittel zum Transport des Fahrzeugs in dem Servicemodul auf.

Ebenfalls bevorzugt weisen das erste und/oder zweite Kontrollmodul zumindest einen optischen Sensor zum Erfassen eines Verschmutzungsgrads einer Außenoberfläche des Fahrzeugs auf. Bei dem optischen Sensor handelt es sich besonders bevorzugt um eine Kamera, einen Laserscanner und/oder um einen Sensor zum Erfassen von UV-Strahlung. Ferner bevorzugt ist der zumindest eine optische Sensor zum Erfassen eines Reflektionsgrades des Fahrzeuglacks ausgebildet. Ebenfalls bevorzugt weist das erste Kontrollmodul eine Scanbrücke oder dergleichen auf, an welcher der zumindest eine optische Sensor befestigt ist. Die Scanbrücke ist bevorzugt von dem Fahrzeug durchfahrbar. Ebenfalls bevorzugt ist der, gegebenenfalls an der Scanbrücke angebrachte, zumindest eine optische Sensor ferner zum Erfassen eines Verschmutzungsgrads eines Fahrzeuginnenraums ausgebildet. Beim Durchfahren des ersten beziehungsweise zweiten Kontrollmoduls sind somit Informationen zur Verschmutzung der Außenseite und des Innenraums des Fahrzeugs erfassbar, insbesondere ohne die Notwendigkeit das Fahrzeug anzuhalten oder zu öffnen. Diese Informationen werden erfindungsgemäß vorteilhaft zum Ermitteln und/oder Evaluieren einer Reinigung genutzt.

Ferner bevorzugt weisen das erste und/oder das zweite Kontrollmodul zumindest einen in das Innere des Fahrzeugs einführbaren (zweiten) Roboterarm auf. Alternativ zu dem Roboterarm kann ein mobiler Roboter verwendet werden, der komplett ins Fahrzeug eingebracht wird. An dem zumindest einen Roboterarm oder dem mobilen Roboter ist zumindest ein optischer Sensor, zumindest ein Feuchtigkeitssensor und/oder zumindest ein Luftgütesensor angeordnet. Durch Einbringen dieser Sensoren in das Fahrzeuginnere können somit eine Vielzahl von Informationen zu einem Verschmutzungsgrad des Fahrzeuginnenraums erfasst werden. Mittels des optischen Sensors sind bevorzugt Informationen zu einem Verschmutzungsgrad von Sitzen, Boden und Dachhimmel des Fahrzeugs erfassbar. Mittels des zumindest einen Feuchtigkeitssensors ist bevorzugt erfassbar, ob eine Trocknung von Elementen des Fahrzeuginnenraums notwendig ist. Mittels des Luftgütesensors ist bevorzugt ein Staub-, Feinstaub-, Partikel- oder Pollengehalt der Luft im Fahrzeuginnenraum erfassbar.

In einer ebenfalls bevorzugten Ausführungsform sind das erste und/oder zweite Kontrollmodul ferner zum Erfassen einer Vielzahl von fahrzeugspezifischen Informationen (unabhängig von einem Verschmutzungsgrad) ausgebildet. Das erste und/oder zweite Kontrollmodul ist bevorzugt dazu ausgebildet, einen Fahrzeugtyp, eine Fahrzeuggröße, das Vorhandensein von Gegenständen (Ladung, Kindersitz, Dokumente, etc.) im Fahrzeug, Einstellwerte von verstellbaren Fahrzeugkomponenten (Sitze, Spiegel, etc.) und dergleichen zu erfassen. Diese Informationen sind im erfindungsgemäßen Verfahren vorteilhaft verwendbar.

Die erfindungsgemäße Servicestation weist ferner bevorzugt ein für die Kommunikation mit einem Fahrzeug und/oder einem Server eingerichtetes Kommunikationsmodul auf. Das Kommunikationsmodul ist beispielsweise ein WLAN- oder Mobilfunk-Modul und ist vorzugsweise zum Durchführen einer Car2X-Kommunikation ausgebildet. Das Kommunikationsmodul ist besonders bevorzugt dafür ausgebildet entsprechend eines von dem Fahrzeug oder dem Server genutzten Kommunikationsprotokolls zu kommunizieren. Das Kommunikationsmodul ist insbesondere dazu ausgebildet, weitere Informationen zu einem Verschmutzungsgrad des Fahrzeugs von dem Fahrzeug oder von dem Server zu empfangen.

Die erfindungsgemäße Servicestation weist ferner eine Steuereinheit auf, die zum Ermitteln einer an einem Fahrzeug durchzuführenden Reinigung ausgebildet ist. Die Steuereinheit ist insbesondere dazu ausgebildet, die durchzuführende Reinigung anhand von Informationen zu einem Verschmutzungsgrad des Fahrzeugs zu ermitteln. Besonders bevorzugt ist die Steuereinheit dafür eingerichtet ist, die am Fahrzeug durchzuführende Reinigung anhand von Informationen zu ermitteln, die mittels des ersten Kontrollmoduls erfasst wurden, und gegebenenfalls anhand von weiteren Informationen, die mittels des zweiten Kommunikationsmoduls von dem Fahrzeug oder von dem Server empfangen wurden. Ebenfalls bevorzugt ist die Steuereinheit dazu ausgebildet, anhand von fahrzeugspezifischen Größen, die von dem ersten Kontrollmodul erfasst wurden, einen Verschmutzungsgrads und/oder eine Reinigung für das Fahrzeug zu ermitteln. Ebenfalls bevorzugt werden die von dem Fahrzeug und/oder von dem Server empfangenen weiteren Informationen mit durch das erste Kontrollmodul erfassten Informationen kombiniert, um die Art und oder den Grad der an dem Fahrzeug durchzuführenden Reinigung zu bestimmen. Ferner bevorzugt ist die Steuereinheit dafür ausgebildet, anhand der mittels des zweiten Kontrollmoduls erfassten Informationen ein Effektivitätsmaß einer durchgeführten Reinigung zu ermitteln. Bevorzugt ist die Steuereinheit ferner dazu ausgebildet, eine ermittelte Reinigung anhand von im ersten Kontrollmodul erfassten fahrzeugspezifischen Informationen anzupassen. Beispielsweise kann eine Reinigung des Fahrzeugs in Abhängigkeit der Fahrzeuggröße angepasst werden oder so durchgeführt werden, dass im Fahrzeug befindliche Gegenstände eines Nutzers nicht entfernt werden. Ebenfalls bevorzugt werden nach Abschluss der Reinigung die erfassten Ausgangspositionen von Fahrzeugkomponenten, wie Sitzpositionen oder Spiegelpositionen, wieder eingestellt.

In einer weiteren bevorzugten Ausführungsform der erfindungsgemäßen Servicestation sind das erste, das zweite und gegebenenfalls weitere Servicemodule in einem gemeinsamen Bereich der Servicestation angeordnet. Besonders bevorzugt sind alle Servicemodule in der Servicestation derart angeordnet, dass sie ihre Funktionen an einem in der ersten Servicestation befindlichen Fahrzeug durchführen können, ohne dass eine Bewegung des Fahrzeugs in der Servicestation notwendig ist. In einer solchen Servicestation werden eine Innenraumreinigung und eine Außenreinigung vorteilhaft sequentiell oder parallel an einem in der Servicestation befindlichen Fahrzeug durchgeführt, ohne dass eine Bewegung des Fahrzeugs erfolgt. In einer bevorzugten Ausführungsform der Servicestation sind das erste Servicemodul und das zweite Servicemodul und gegebenenfalls weitere Servicemodule in verschiedenen Bereichen der Servicestation angeordnet. Gemäß dieser Ausführungsform ist somit eine Bewegung des Fahrzeugs zwischen der Durchführung der einzelnen Reinigungen erforderlich. Gemäß einer besonders bevorzugten Ausführungsform sind alle Servicemodule separat voneinander in der Servicestation angeordnet, die Servicestation ist mithin vollständig modular aufgebaut. In jedem der Servicemodule erfolgt die entsprechende Reinigung und anschließend erfolgt eine Bewegung des Fahrzeugs zum nächsten Modul.

Ferner bevorzugt weist die Servicestation ein zum Befüllen eines Energiespeichers des Fahrzeugs ausgebildetes drittes Servicemodul auf. Das dritte Servicemodul ist besonders bevorzugt dazu ausgebildet, ein Batteriesystem des Fahrzeugs zu laden oder einen Kraftstofftank des Fahrzeugs zu füllen. Ebenfalls bevorzugt weist die Servicestation ein zum Durchführen einer Wartung und/oder einer Reparatur des Fahrzeugs ausgebildetes viertes Servicemodul auf. Das vierte Servicemodul ist besonders bevorzugt dazu ausgebildet, Betriebsflüssigkeiten des Fahrzeugs, wie beispielsweise Kühlflüssigkeit, Bremsflüssigkeit, Wischwasser oder dergleichen aufzufüllen. Alternativ oder zusätzlich ist das vierte Servicemodul dazu ausgebildet, Verschleißteile des Fahrzeugs auszutauschen, wie beispielsweise Bremsbeläge, Wischerblätter, Luftfilter oder dergleichen. Besonders bevorzugt ist das vierte Servicemodul zum vollautonomen Durchführen der vorgenannten Serviceaktionen ausgebildet. Alternativ erfolgen die vorgenannten Serviceaktionen zumindest teilautonom.

Ebenfalls bevorzugt weist die Servicestation ein zum Be- und/oder Entladen des Fahrzeugs ausgebildetes Logistikmodul auf. Das Logistikmodul ist bevorzugt dazu ausgebildet, bestellte Waren oder Güter in ein Fahrzeug zu laden. Somit können Bestellungen eines Nutzers, der ein autonomes Fahrzeug angefragt hat, in dieses Fahrzeug geladen werden, bevor es die autonome Fahrt zu dem Nutzer antritt. Alternativ oder zusätzlich können aus einem von einer Fahrt mit einem bestimmten Nutzer zurückkehrenden Fahrzeug Waren oder Güter mittels des Logistikmoduls entnommen werden. Diese Waren oder Güter sind dabei beispielsweise zum Transport an weiter entfernte Orte vorgesehen und werden in der Servicestation gesammelt, um schließlich an ein Logistikunternehmen übergeben werden zu können. Ebenfalls bevorzugt weist die Servicestation Stellplätze für nicht im Betrieb befindliche autonome Fahrzeuge auf. Somit können diese autonomen Fahrzeuge in der Servicestation sicher verwahrt werden. Ferner ist somit eine effektive Kontrolle der Anzahl im Betriebsbereich befindlicher Fahrzeuge möglich. Somit kann die Dichte der Fahrzeuge im Betriebsbereich angepasst werden.

Ein weiterer Aspekt der vorliegenden Erfindung betrifft ein Verfahren zum autonomen Reinigen eines Fahrzeugs, das von einer erfindungsgemäßen Servicestation, wie vorstehend beschrieben, durchgeführt wird. Bevorzugt handelt es sich um ein Verfahren zur autonomen Reinigung eines in einem Betriebsbereich operierenden autonomen Fahrzeugs. Mit anderen Worten können die Fahrzeuge innerhalb des Betriebsbereichs von Nutzern für autonome Fahrdienstleistungen genutzt werden, unabhängig davon, ob es sich um Fahrzeuge eines Carsharing-Anbieters oder um private Fahrzeuge handelt. Zumindest in dem Betriebsbereich ist somit die für einen autonomen Fahrbetrieb der Fahrzeuge notwendige Infrastruktur vorhanden.

Erfindungsgemäß weist der vorgenannte Betriebsbereich der autonomen Fahrzeuge zumindest eine zur Durchführung einer Reinigung des Fahrzeugs ausgestatte Servicestation auf. Ferner ist zumindest ein Server zur Kommunikation mit dem zumindest einen autonomen Fahrzeug und der zumindest einen Servicestation eingerichtet. Das erfindungsgemäße Verfahren wird vorteilhaft in einem derartigen Betriebsbereich realisiert. Im Rahmen der vorliegenden Erfindung führt ein autonomes Fahrzeug bevorzugt eine autonome Fahrt zu der Servicestation durch, entweder vor oder als Teil des erfindungsgemäßem Verfahrens. Besonders bevorzugt erfolgt eine solche autonome Fahrt zur Servicestation in Reaktion auf das Ermitteln eines Reinigungsbedarfs anhand einer Nutzereingabe und/oder anhand erfasster Informationen.

In einem ersten Schritt des erfindungsgemäßen Verfahrens werden von dem ersten Kontrollmodul einer erfindungsgemäßen Servicestation erste Informationen zu einem Verschmutzungsgrad des Fahrzeugs erfasst. Mit anderen Worten wird in einem ersten Schritt eine Information zu einer Zustandseigenschaft eines Fahrzeugs ermittelt, die angibt, dass ein Ist-Zustand der Verschmutzung des Fahrzeugs von einem Soll-Zustand desselben abweicht. Dabei kann der Soll-Zustand für alle Fahrzeuge gelten oder individuell für ein bestimmtes Fahrzeug, beispielsweise von einem Nutzer oder Inhaber des Fahrzeugs, festgelegt sein. Die Informationen zum Verschmutzungsgrad des Fahrzeugs sind dabei besonders bevorzugt von zumindest einem dritten Sensor des ersten Kontrollmoduls erfasste Informationen.

In einem nächsten Schritt des erfindungsgemäßen Verfahrens wird eine an dem Fahrzeug durchzuführende Reinigung anhand der ersten Informationen zum Verschmutzungsgrad des Fahrzeugs ermittelt. Eine Reinigung beschreibt dabei in allgemeinster Form eine Einwirkung auf das Fahrzeug, um dieses von dem vorliegenden Ist-Zustand der Verschmutzung in einen gewünschten Soll-Zustand zu überführen. Besonders bevorzugt wird eine Art der Reinigung dabei anhand der Art des ermittelten Verschmutzungsgrads ermittelt. Ferner bevorzugt wird ein Grad der Reinigung anhand des Verschmutzungsgrads ermittelt. Beispielsweise wird anhand des Verschmutzungsgrads ermittelt, ob eine Außenreinigung, gegebenenfalls mit oder ohne eine Felgenreinigung oder eine Unterbodenreinigung, oder ob eine Innenreinigung, gegebenenfalls mit oder ohne eine Polster- und Teppichreinigung, durchgeführt werden soll.

In einem nächsten Schritt des erfindungsgemäßen Verfahrens wird in der Servicestation die ermittelte Reinigung teil- oder vollautonom durchgeführt. Die Reinigung erfolgt dabei insbesondere mit dem ersten und/oder zweiten Servicemodul der Servicestation. Besonders bevorzugt erfolgt in der Servicestation eine vollautomatische Außen- und/oder Innenreinigung des Fahrzeugs entsprechend der erfassten ersten Informationen zum Verschmutzungsgrad.

Im erfindungsgemäßen Verfahren erfolgt ferner ein Erfassen von zweiten Informationen zu einem Verschmutzungsgrad des Fahrzeugs mittels des zweiten Kontrollmoduls. Die Art der zweiten Informationen entspricht dabei bevorzugt der Art der oben genannten ersten Informationen. Vorteilhaft können die zweiten Informationen zum Überprüfen der Qualität der autonom durchgeführten Reinigung verwendet werden. Besonders bevorzugt wird im erfindungsgemäßen Verfahren überprüft, ob ein Ist-Zustand des Fahrzeugs nach dem Durchführen der Reinigung dem angestrebten Soll-Zustand desselben entspricht.

Das erfindungsgemäße Verfahren ermöglicht vorteilhaft eine automatische Reinigung eines autonom fahrenden Fahrzeugs, im Extremfall ohne jegliche Einwirkung eines Nutzers. Somit kann stets ein sauberes Erscheinungsbild des Fahrzeugs werden und mit Verschmutzungen zusammenhängenden Schäden am Fahrzeug (Flugrost) vermieden werden. Insbesondere im Hinblick auf Carsharing-Anbieter bleibt durch das autonome und bedarfsgerechte Reinigen der Fahrzeuge auch deren kommerzielle Einsatzfähigkeit erhalten. Indem alle Schritte des erfindungsgemäßen Verfahrens vollautomatisch durchführbar sind, sind zudem ein Personalaufwand und die damit verbundenen Kosten vorteilhaft reduziert.

In einer besonders bevorzugten Durchführungsform des erfindungsgemäßen Verfahrens erfolgt ferner ein Vergleich der zweiten Informationen mit den ersten Informationen oder mit einer zu der durchgeführten Reinigung vorbestimmten Zielvorgabe. Mit anderen Worten wird der Verschmutzungsgrad nach der Reinigung mit dem Verschmutzungsgrad vor der Reinigung oder mit einem angestrebten Ergebnis der Reinigung verglichen. Anhand dieses Vergleichs wird bevorzugt ein Effektivitätsmaß der durchgeführten Reinigung ermittelt, beispielsweise als Verhältnis des Verschmutzungsgrads gemäß der ersten Informationen und des Verschmutzungsgrads gemäß der zweiten Informationen. Anhand des bestimmten Effektivitätsmaßes ist die Qualität der durchgeführten Reinigung vorteilhaft quantisierbar.

Besonders bevorzugt wird das Effektivitätsmaß mit einem vorbestimmten Grenzwert, sprich einem vorbestimmten Grenzwert für das Effektivitätsmaß, verglichen. Ist das Effektivitätsmaß gleich oder größer als der vorbestimmte Grenzwert, ist die autonome Reinigung des Fahrzeugs erfolgreich abgeschlossen. Ist das Effektivitätsmaß jedoch geringer als der vorbestimmte Grenzwert, erfolgt ein erneutes Durchführen der Reinigung mittels des ersten Servicemoduls und/oder des zweiten Servicemoduls. Alternativ oder zusätzlich erfolgt die Ausgabe einer Fehlermeldung, beispielsweise wenn nach der erneuten Durchführen der Reinigung, zweite Informationen erfasst wurden, die zu einem zu geringen Effektivitätsmaß korrespondieren.

Ferner bevorzugt kehrt ein autonomes Fahrzeug mittels einer autonomen Fahrt an einen vorherigen Standort des Fahrzeugs zurück, sofern die autonome Durchführung der Reinigung erfolgreich abgeschlossen ist, also sofern die Überprüfung der Reinigung erfolgreich absolviert ist. Alternativ kehrt das Fahrzeug an einen Standort zurück, an dem es nach der Reinigung benötigt wird, beispielsweise einen Arbeitsplatz des Nutzers oder dergleichen. Derartige Standorte können beispielsweise anhand eines Zeitplans ermittelt werden. Ebenfalls alternativ kehrt ein autonomes Fahrzeug einer Carsharing-Flotte nach der Reinigung in den Betrieb in der autonomen Fahrzeugflotte, sprich an einen variablen Standort, zurück.

In einer besonders bevorzugten Durchführungsform des erfindungsgemäßen Verfahrens werden von der erfindungsgemäßen Servicestation weitere Informationen zu einem Verschmutzungsgrad des Fahrzeugs empfangen und im Verfahren verwendet.

Dabei weisen die weiteren Informationen bevorzugt von dem Fahrzeug erfasste erste Informationen zu einem Verschmutzungsgrad des Fahrzeugs auf. Das Fahrzeug weist hierfür bevorzugt zumindest einem zum Erfassen von Fahrzeugdaten ausgebildeten zweiten Sensor auf. Bei dem Sensor handelt es sich bevorzugt um einen Innenraumkamera zum Erfassen eines Verschmutzungsgrads eines Innenraums. Ebenfalls bevorzugt handelt es sich um eine zum Erfassen von Bildsignalen der Karosserieoberfläche des Fahrzeugs ausgebildete Kamera, beispielsweise um eine am Dashboard oder Rückspiegel angeordnete und auf die Motorhaube gerichtete Kamera oder um eine am Seitenspiegel und auf den Kotflügel oder die Tür gerichtete Kamera. Ebenfalls bevorzugt handelt es sich um einen Sensor zum Erfassen von Partikeln in der Innenraumluft. Ebenfalls bevorzugt handelt es sich um Sensoren zum Erfassen eines Reflektionsgrades des Fahrzeuglacks. Die ersten Informationen werden bevorzugt vom Fahrzeug direkt oder via den Server an die erfindungsgemäße Servicestation übermittelt.

Ebenfalls bevorzugt weisen die weiteren Informationen auf einer Nutzereingabe basierende zweite Informationen auf. Die zweiten Informationen sind dabei besonders bevorzugt über eine Fahrzeugschnittstelle und/oder ein mobiles Endgerät erfasst worden. In einer Durchführungsform charakterisieren die zweiten Informationen den Grad der Verschmutzung, beispielsweise anhand einer vorgegebenen Skala, und/oder spezifizieren die Art/den Ort der Verschmutzung, beispielsweise einen Fleck auf der Rückbank. Ebenfalls bevorzugt enthalten die zweiten Informationen vom Nutzer aufgenommene Bildinformationen, beispielsweise mit dem Smartphone aufgenommene Bilder des Fahrzeuginnenraums. Ebenfalls bevorzugt charakterisieren die zweiten Informationen eine erfolgte Nutzung des Fahrzeugs, beispielsweise indem Informationen zum Transport von Tieren, Kindern oder Sportfans gegeben werden.

Anhand solcher Nutzungsinformation lassen sich mit diesen Nutzungsarten verbundene typische Verschmutzungen und schließlich geeignete Reinigungsmethoden ermitteln. Die Nutzereingabe erfolgt bevorzugt in Reaktion auf eine entsprechende Eingabeaufforderung.

Ebenfalls bevorzugt weisen die weiteren Informationen von dem Server bereitgestellte dritte Informationen auf. Bei den dritten Informationen handelt es sich bevorzugt um fahrerunspezifische sowie fahrzeugunspezifische Informationen. Die dritten Informationen charakterisieren bevorzugt Rahmenbedingungen, die eine spezielle Verschmutzung mit einer bestimmten Wahrscheinlichkeit bewirken können. Beispielsweise enthalten die dritten Informationen Daten zum Wetter, zur Jahreszeit, zum Vorherrschen einer Grippewelle, zur Allergieinformationen oder dergleichen. Diese Informationen sind beispielsweise geeignet, um entsprechende Gegenmaßnahmen einzuleiten, wie beispielsweise eine Unterbodenwäsche zur Streusalzentfernung oder eine Polsterdesinfektion während einer Grippesaison.

Gemäß dieser bevorzugten Durchführungsform des erfindungsgemäßen Verfahrens wird eine an dem Fahrzeug durchzuführende Reinigung anhand der mittels des ersten Kontrollmoduls erfassten ersten Informationen zum Verschmutzungsgrad des Fahrzeugs und darüber hinaus anhand der mittels des Kommunikationsmoduls empfangenen weiteren Informationen zum Verschmutzungsgrad ermittelt. Somit wird eine besonders geeignete Reinigung ermittelt.

Ferner bevorzugt erfolgt das Ermitteln der Reinigung, also von Art und Grad der aufgrund des Verschmutzungsgrads durchzuführenden Reinigung, vollautomatisch anhand der Informationen zum Verschmutzungsgrad des Fahrzeugs. Das Ermitteln der durchzuführenden Reinigung erfolgt dabei durch die erfindungsgemäße Servicestation. Ferner bevorzugt erfolgt das Ermitteln der durchzuführenden Reinigung automatisch, beispielsweise datenbankbasiert, mittels zumindest eines Look-up-Tables, LUT, mittels zumindest eines Algorithmus und/oder mittels einer künstlichen Intelligenz. Alternativ oder zusätzlich bevorzugt erfolgt das Ermitteln der durchzuführenden Reinigung zumindest teilweise anhand einer Nutzereingabe, beispielsweise durch einen Mitarbeiter einer Servicestation. Ferner bevorzugt erfolgt das Ermitteln der durchzuführenden Reinigung unter Berücksichtigung der Auslastung der Servicestation.

In einer ebenfalls bevorzugten Durchführungsform des erfindungsgemäßen Verfahrens werden einem Nutzer des Fahrzeugs Informationen über die ermittelte durchzuführende Reinigung übermittelt. Mit anderen Worten wird der Nutzer von der erfindungsgemäßen Servicestation mittels einer an den Nutzer, beispielsweise an ein Smartphone des Nutzers, gesendeten Nachricht darüber informiert, dass eine oder mehrere Reinigungsoptionen ermittelt wurden, die angesichts des Verschmutzungsgrad des Fahrzeugs empfohlen werden. Darüber hinaus können zu jeder Reinigungsoption eine Kostenschätzung und/oder eine Zeitschätzung übermittelt werden. Der Nutzer kann daraufhin eine Auswahl treffen, ob eine Reinigung und gegebenenfalls welche der Reinigungsoptionen an dem Fahrzeug durchzuführen ist. Basierend auf dieser Auswahl werden der Servicestation Informationen zu der vom Nutzer getroffenen Auswahl übermittelt, so dass die erfindungsgemäß Servicestation letztlich Informationen über eine an dem Fahrzeug durchzuführende Reinigung von dem Nutzer empfängt.

Die Verfahrensschritte des erfindungsgemäßen Verfahrens können durch elektrische oder elektronische Bauteile oder Komponenten (Hardware), durch Firmware (ASIC) implementiert sein oder durch beim Ausführen eines geeigneten Programms (Software) verwirklicht werden. Ebenfalls bevorzugt wird das erfindungsgemäße Verfahren durch eine Kombination von Hardware, Firmware und/oder Software verwirklicht, beziehungsweise implementiert. Beispielsweise sind einzelne Komponenten zum Durchführen einzelner Verfahrensschritte als separat integrierter Schaltkreis ausgebildet oder auf einem gemeinsamen integrierten Schaltkreis angeordnet. Einzelne zum Durchführen einzelner Verfahrensschritte eingerichtete Komponenten sind ferner bevorzugt auf einem (flexiblen) gedruckten Schaltungsträger (FPCB/PCB), einem Tape Carrier Package (TCP) oder einem anderen Substrat angeordnet.

Die einzelnen Verfahrensschritte des erfindungsgemäßen Verfahrens sind ferner bevorzugt als ein oder mehrere Prozesse ausgebildet, die auf einem oder mehreren Prozessoren in einem oder mehreren elektronischen Rechengeräten laufen und beim Ausführen von ein oder mehreren Computerprogrammen erzeugt werden. Die Rechengeräte sind dabei bevorzugt dazu ausgebildet mit anderen Komponenten, beispielsweise einem Kommunikationsmodul sowie ein oder mehreren Sensoren beziehungsweise Kameras, zusammenzuarbeiten, um die hierin beschriebenen Funktionalitäten zu verwirklichen. Die Anweisungen der Computerprogramme sind dabei bevorzugt in einem Speicher abgelegt, wie beispielsweise einem RAM-Element. Die Computerprogramme können jedoch auch in einem nicht-flüchtigen Speichermedium, wie beispielsweise einer CD-ROM, einem Flash-Speicher oder dergleichen abgelegt sein.

Dem Fachmann ist ferner ersichtlich, dass die Funktionalitäten von mehreren Computern (Datenverarbeitungsgeräten) kombiniert oder in einem einzigen Gerät kombiniert sein können oder dass die Funktionalität von einem bestimmten Datenverarbeitungsgerät auf eine Vielzahl von Geräten verteilt vorliegen kann, um die Schritte des erfindungsgemäßen Verfahrens auszuführen, ohne von dem zuvor beschriebenen erfindungsgemäßen Verfahren abzuweichen.

Ein weiterer Aspekt der Erfindung betrifft ein Computerprogramm, umfassend Befehle, die bei der Ausführung des Programms durch einen Computer, wie beispielsweise eine Steuereinheit einer erfindungsgemäßen Servicestation, diesen veranlassen, das erfindungsgemäße Verfahren auszuführen, wobei das erfindungsgemäße Verfahren der Steuereinheit die Schritte: Kontrolle des Erfassens von ersten Informationen zu einem Verschmutzungsgrad des Fahrzeugs mittels des ersten Kontrollmoduls; Ermitteln einer an dem Fahrzeug durchzuführenden Reinigung anhand der Informationen zum Verschmutzungsgrad des Fahrzeugs; Kontrolle des Durchführens der Reinigung mittels des ersten Servicemoduls und/oder des zweiten Servicemoduls; und Kontrolle des Erfassens von zweiten Informationen zu einem Verschmutzungsgrad des Fahrzeugs mittels des zweiten Kontrollmoduls, aufweist.

Ein weiterer Aspekt der Erfindung betrifft ein computerlesbares Speichermedium, umfassend Befehle, die bei der Ausführung durch einen Computer, wie beispielsweise eine Steuereinheit einer erfindungsgemäßen Servicestation, diesen veranlassen, das erfindungsgemäße Verfahren auszuführen, wobei das erfindungsgemäße Verfahren der Steuereinheit die Schritte: Kontrolle des Erfassens von ersten Informationen zu einem Verschmutzungsgrad des Fahrzeugs mittels des ersten Kontrollmoduls; Ermitteln einer an dem Fahrzeug durchzuführenden Reinigung anhand der Informationen zum Verschmutzungsgrad des Fahrzeugs; Kontrolle des Durchführens der Reinigung mittels des ersten Servicemoduls und/oder des zweiten Servicemoduls; und Kontrolle des Erfassens von zweiten Informationen zu einem Verschmutzungsgrad des Fahrzeugs mittels des zweiten Kontrollmoduls, aufweist.

Weitere bevorzugte Ausgestaltungen der Erfindung ergeben sich aus den übrigen, in den Unteransprüchen genannten Merkmalen. Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: eine schematische Darstellung eines Systems zur Durchführung des erfindungsgemäßen Verfahrens aus einem autonomen Fahrzeug, einem Server eines Flottenbetreibers und Servicestationen;
- Figur 2: eine schematische Darstellung eines Betriebsbereichs zur Durchführung des erfindungsgemäßen Verfahrens mittels des in Figur 1 dargestellten Systems;
- Figur 3: eine schematische Darstellung eines erstes Servicemoduls zur Innenraumreinigung des Fahrzeugs;
- Figur 4: eine schematische Darstellung eines zweiten Servicemoduls zur Außenreinigung des Fahrzeugs;
- Figur 5: eine schematische Darstellung einer erfindungsgemäßen Servicestation gemäß einer ersten Ausführungsform;
- Figur 6: eine schematische Darstellung einer erfindungsgemäßen Servicestation gemäß einer zweiten Ausführungsform; und
- Figur 7: ein schematisches Ablaufdiagram eines Verfahrens zur autonomen Reinigung eines Fahrzeugs gemäß einer Durchführungsform.

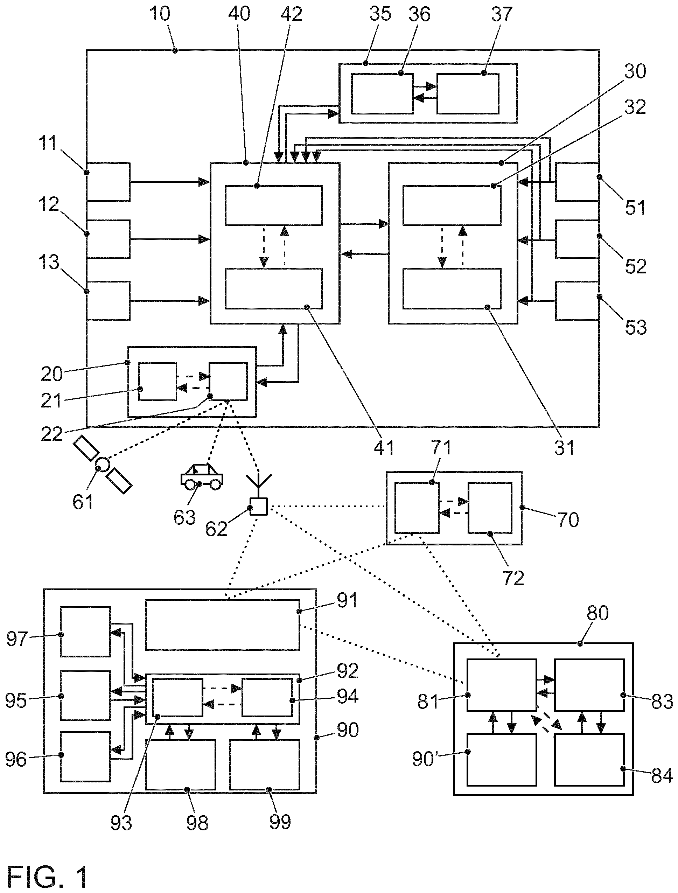

Figur 1 zeigt eine schematische Darstellung eines Systems zur Durchführung des erfindungsgemäßen Verfahrens, aufweisend ein autonomes Fahrzeug 10, einen Server 70, eine erste erfindungsgemäße Servicestation 90, eine zweite erfindungsgemäße Servicestation 80.

In Figur 1 ist ein Blockschaltbild eines zweispurigen Fahrzeugs 10 mit Elektromotor 37 dargestellt. Das Fahrzeugs 10 umfasst eine Vielzahl erster Sensoren, insbesondere einen ersten Sensor 11, einen zweiten Sensor 12, und einen dritten Sensor 13. Die ersten Sensoren 11, 12, 13 sind zum Erfassen von Umweltinformationen beziehungsweise Umgebungsdaten des Fahrzeugs 10 eingerichtet und weisen beispielsweise Temperatursensoren zum Erfassen einer Umgebungstemperatur, eine Kamera zum Erfassen eines Bildes einer das Fahrzeugs 10 unmittelbar umgebenden Umwelt, ein Mikrofon zum Erfassen von Geräuschen einer das Fahrzeugs 10 unmittelbar umgebenden Umwelt und Abstandssensoren wie beispielsweise Ultraschallsensoren zum Erfassen von Abständen zu das Fahrzeug 10 umgebenden Objekten auf. Die ersten Sensoren 11, 12, 13 übertragen die von ihnen erfassten Umgebungssignale an eine erste Steuereinheit 40 des Fahrzeugs 10.

Das Fahrzeug 10 weist ferner eine Mehrzahl zweiter Sensoren, insbesondere einen vierten Sensor 51, einen fünften Sensor 52, und einen sechsten Sensor 53 auf. Bei den zweiten Sensoren 51, 52 ,53 handelt es sich um Sensoren zum Ermitteln von das Fahrzeug 10 selbst betreffenden Zustandsdaten, wie beispielsweise aktuelle Lage- und Bewegungsinformationen des Fahrzeugs 10. Bei den zweiten Sensoren handelt es sich folglich beispielsweise um Geschwindigkeitssensoren, Beschleunigungssensoren, Neigungssensoren, Innenraumbewegungsmelder, Drucksensoren in den Fahrzeugsitzen oder dergleichen. Darüber hinaus sind zumindest einige der zweiten Sensoren 51, 52, 53 zum Erfassen eines Verschmutzungsgrads des Fahrzeugs ausgebildet. Die dafür ausgebildeten zweiten Sensoren umfassen beispielsweise eine Innenraumkamera zum Erfassen von Bildsignalen des Fahrzeuginnenraums, eine Dashboard-Kamera zum Erfassen von Bildsignalen der Motorhaube, eine Kamera in einem Seitenspiegel zum Erfassen von Bildsignalen einer Seitentür des Fahrzeugs und anderweitige Sensoren zum Erfassen einer Verschmutzung, beispielsweise anhand eines Reflektiongrades des Fahrzeuglacks oder dergleichen. Die zweiten Sensoren 51, 52, 53 übermitteln die von ihnen erfassten Zustandssignale an die erste Steuereinheit 40 des Fahrzeugs 10. Darüber hinaus übermitteln zumindest einige der zweiten Sensoren 51, 52, 53 ihre Messergebnisse unmittelbar an ein Fahrsystem 30 des Fahrzeugs 10.

Das Fahrzeug 10 weist ferner ein erstes Kommunikationsmodul 20 mit einem Speicher 21 und einem oder mehreren Transpondern beziehungsweise Sendeempfängern 22 auf. Bei den Transpondern 22 handelt es sich um einen Funk-, WLAN-, GPS- oder Bluetooth-Sendeempfänger oder dergleichen. Der Transponder kommuniziert mit dem internen Speicher 21 des ersten Kommunikationsmoduls 20, beispielsweise über einen geeigneten Datenbus. Mittels des Transponders 22 kann beispielsweise die aktuelle Position des Fahrzeugs 10 durch Kommunikation mit einem GPS Satelliten 61 ermittelt und diese im internen Speicher 21 gespeichert werden. Ebenso kann mittels des Transponders 22 eine im Speicher 21 abgelegte Berechtigungsinformation an ein externes Kommunikationsmodul übermittelt werden. Das erste Kommunikationsmodul 20 kommuniziert mit der ersten Steuereinheit 40.

Darüber hinaus ist das erste Kommunikationsmodul 20 dafür eingerichtet, mit einem Server 70, insbesondere einem vierten Kommunikationsmodul 71 eines Servers 70, zu kommunizieren, beispielsweise über ein UMTS (Universal Mobile Telecommunication Service) oder LTE (Long Term Evolution) Mobilfunknetz. Das erste Kommunikationsmodul 20 ist ferner dazu eingerichtet mit einem zweiten Kommunikationsmodul 92 einer ersten Servicestation 90 zu kommunizieren und ist ferner dazu eingerichtet mit einem dritten Kommunikationsmodul 81 einer zweiten Servicestation 80 zu kommunizieren, beispielsweise jeweils über ein UMTS oder LTE Mobilfunknetz. Die Kommunikation über das Mobilfunknetz erfolgt dabei über ein oder mehrere Basisstationen 62 des Mobilfunknetzes.

Das Fahrzeug 10 weist ferner das Fahrsystem 30 auf, das zum vollständig autonomen Fahrbetrieb, insbesondere zur Längs- und Querführung, des Kraftfahrzeugs 10 eingerichtet ist.

Das Fahrsystem 30 weist ein Navigationsmodul 32 auf, das zum Berechnen von Routen zwischen einem Start- und einem Zielpunkt und zum Ermitteln der entlang dieser Route vom Kraftfahrzeug 10 durchzuführenden Manöver eingerichtet ist. Darüber hinaus umfasst das Fahrsystem 30 einen internen Speicher 31, beispielsweise für Kartenmaterialien, der mit dem Navigationsmodul 32 kommuniziert, beispielsweise über einen geeigneten Datenbus. Zumindest ein Teil der zweiten Sensoren 51, 52, 53, des Kraftfahrzeugs übermittelt seine Messergebnisse direkt an das Fahrsystem 30. Bei diesen unmittelbar an das Fahrsystem 30 übermittelten Daten handelt es sich insbesondere um aktuelle Lage- und Bewegungsinformationen des Fahrzeugs 10. Diese werden bevorzugt von Geschwindigkeitssensoren, Beschleunigungssensoren, Neigungssensoren, etc. erfasst.

Das Fahrzeug 10 weist ferner ein elektrisches Fahrsystem 35 auf, das die zum elektrischen Antrieb des Fahrzeugs 10 notwendigen Funktionalitäten zur Verfügung stellt. Insbesondere weist das elektrische Fahrsystem 35 einen elektrischen Energiespeicher 36 auf, der einem Elektromotor 37 die zum Antrieb des Fahrzeugs 10 notwendige elektrische Energie zur Verfügung stellt. Das elektrische Fahrsystem 35 weist ferner eine nicht dargestellte Ladevorrichtung zum Aufladen des elektrischen Energiespeichers 36 auf. Bei dem Fahrzeug 10 kann es sich darüber hinaus um ein Hybridfahrzeug handeln, welches einen Wasserstofftank zum Versorgen eines im Fahrzeug angeordneten Brennstoffzellensystems aufweist.

Das Fahrzeug 10 weist ferner eine erste Steuereinheit 40 auf. Die erste Steuereinheit 40 verfügt über einen internen Speicher 41 und eine CPU 42, welche miteinander kommunizieren, beispielsweise über einen geeigneten Datenbus. Darüber hinaus steht die erste Steuereinheit 40 in Kommunikationsverbindung mit zumindest den ersten Sensoren 11, 12, 13, den zweiten Sensoren 51, 52, 53, dem ersten Kommunikationsmodul 20 und dem Fahrsystem 30, beispielsweise über eine oder mehrere jeweilige CAN-Verbindungen, eine oder mehrere jeweilige SPI-Verbindungen, oder andere geeignete Datenverbindungen.

Das erfindungsgemäße System zum Durchführen des erfindungsgemäßen Verfahrens weist ferner bevorzugt einen Server 70 auf. Der Server 70 wird bevorzugt von einem Flottenbetreiber einer autonomen Fahrzeugflotte, beispielsweise im Rahmen eines Carsharing-Konzepts, und/oder von einem Serviceanbieter für Fahrzeugreinigungen und/oder von einem Fahrzeughersteller betrieben. Der Server 70 weist ein viertes Kommunikationsmodul 71 auf, das zur Kommunikation mit dem gleichen Protokoll wie das erste Kommunikationsmodul 20 des Fahrzeugs 10 eingerichtet ist. Der Server 70 weist ferner eine vierte Steuereinheit 72 auf. Ferner weist der Server 70 bevorzugt einen nicht dargestellten Speicher auf. Die vierte Steuereinheit 72 ist bevorzugt dazu ausgebildet, mittels des vierten Kommunikationsmoduls 71 weitere Informationen zu einem Verschmutzungsgrad eines Fahrzeugs 10 zu empfangen und diese weiteren Informationen daraufhin an eine Servicestation 80, 90 weiterzuleiten.

Das erfindungsgemäße System zum Durchführen des erfindungsgemäßen Verfahrens weist eine Mehrzahl erfindungsgemäßer erster Servicestation 80 und zumindest eine erfindungsgemäße zweite Servicestation 90 auf, von denen Figur 1 jeweils eine darstellt.

Die erste Servicestation 90 weist ein zweites Kommunikationsmodul 91 auf, das zur Kommunikation mit dem ersten Kommunikationsmodul 20 des Fahrzeugs 10, zur Kommunikation mit dem vierten Kommunikationsmodul 71 des Servers 70 und zur Kommunikation mit einem dritten Kommunikationsmodul 81 einer zweiten Servicestation 80 ausgebildet ist. Insbesondere ist das zweite Kommunikationsmodul 91 zur Kommunikation mit dem gleichen Protokoll wie das erste Kommunikationsmodul 20 des Fahrzeugs 10, wie das vierte Kommunikationsmodul 71 des Servers 70 und wie das dritte Kommunikationsmodul 81 der zweiten Servicestation 80 eingerichtet. Besonders bevorzugt ist das zweite Kommunikationsmodul 91 dazu ausgebildet, weitere Informationen zu einem Verschmutzungsgrad des Fahrzeugs 10 zu empfangen.

Darüber hinaus weist die erste Servicestation 90 eine zweite Steuereinheit 92 auf, welche einen Speicher 93 und eine CPU 94 aufweist, die über einen geeigneten Datenbus, beispielsweise einen CAN-Bus oder SPI-Bus, miteinander kommunizieren. Die zweite Steuereinheit 92 ist insbesondere dazu ausgebildet anhand von ersten Informationen zu einem Verschmutzungsgrad des Fahrzeugs 10 eine an dem Fahrzeug 10 durchzuführende Reinigung zu ermitteln. Ferner ist die zweite Steuereinheit 92 dazu ausgebildet, die Durchführung einer Reinigung an dem Fahrzeug 10 zu kontrollieren. Die zweite Steuereinheit 92 ist ferner dazu ausgebildet anhand von zweiten Informationen zu einem Verschmutzungsgrad des Fahrzeugs 10 ein Effektivitätsmaß der durchgeführten Reinigung zu bestimmen und mit einem vorbestimmten Grenzwert zu vergleichen. Die erste Servicestation 90 weist ferner ein erstes Servicemodul 95 zum Durchführen einer Innenreinigung des Fahrzeugs 10 und ein zweites Servicemodul 96 zum Durchführen einer Außenreinigung des Fahrzeugs 10 auf. Ferner weist die erste Servicestation 90 ein drittes Servicemodul 97 auf, das zum Befüllen eines Energiespeichers 36 des Fahrzeugs ausgebildet ist. Darüber hinaus weist die erste Servicestation 90 ein den Servicemodulen 95, 96, 97 vorgelagertes erstes Kontrollmodul 98 auf, das zum Erfassen erster Informationen zu einem Verschmutzungsgrad des Fahrzeugs 10 ausgebildet ist. Ferner weist die erste Servicestation 90 ein den Servicemodulen 95, 96, 97 nachgelagertes zweites Kontrollmodul 99 auf, das zum Erfassen zweiter Informationen zu einem Verschmutzungsgrad des Fahrzeugs 10 ausgebildet ist.

Jedes der Servicemodule 95, 96, 97 und die Kontrollmodule 98 99 sind zur Kommunikation mit der Steuereinheit 92 ausgebildet. Die zweite Steuereinheit 92 ist dazu ausgebildet, in Kommunikation mit dem zweiten Kommunikationsmodul 91, den Servicemodulen 95, 96, 97 und den Kontrollmodulen 98, 99 die von der ersten Servicestation 90 durchgeführten Schritte des erfindungsgemäßen Verfahrens durchzuführen.

Darüber hinaus weist das erfindungsgemäße System zumindest eine zweite Servicestation 80 auf. Die zweite Servicestation 80 weist ein drittes Kommunikationsmodul 81 auf, das zur Kommunikation mit dem ersten Kommunikationsmodul 20 des Fahrzeugs 10, zur Kommunikation mit dem vierten Kommunikationsmodul 71 des Servers 70 und zur Kommunikation mit dem zweiten Kommunikationsmodulen 91 der ersten Servicestationen 90 ausgebildet ist. Insbesondere ist das dritte Kommunikationsmodul 81 zur Kommunikation mit dem gleichen Protokoll wie das erste Kommunikationsmodul 20 des Fahrzeugs 10, wie das vierte Kommunikationsmodul 71 des Servers 70 und wie das zweite Kommunikationsmodul 91 der ersten Servicestation 90 eingerichtet. Darüber hinaus weist die zweite Servicestation 80 eine nicht explizit dargestellte dritte Steuereinheit 82' auf, welche beispielsweise einen Speicher und eine CPU aufweist, die über einen geeigneten Datenbus, beispielsweise einen CAN-Bus oder SPI-Bus, miteinander kommunizieren. Die zweite Servicestation 80 weist ferner ein erstes Servicemodul 95', ein zweites Servicemodul 96', ein drittes Servicemodul 97', ein erstes Kontrollmodul 98' und ein zweites Kontrollmodul 99' auf, die in Figur 1 gemeinsam mit der dritten Steuereinheit 82' als modifizierte erste Servicestation 90' dargestellt sind. Mit anderen Worten, die zweite Servicestation 80 weist diese bereits für die erste Servicestation 90 beschriebenen Komponenten ebenfalls auf. Die modifizierte erste Servicestation 90' ist dahingehend genauso konfiguriert, wie für die erste Servicestation 90 oben beschrieben.

Darüber hinaus weist die zweite Servicestation 80 ein viertes Servicemodul 83 und ein Logistikmodul 84 auf. Die Servicemodule 95' bis 97' und 83 sowie das Logistikmodul 84 kommunizieren mit der dritten Steuereinheit 82'. Die dritte Steuereinheit 82' ist dazu ausgebildet, in Kommunikation mit dem dritten Kommunikationsmodul 81, dem ersten bis vierten Servicemodul 95' bis 97', 83 und dem Logistikmodul 84 die von der zweiten Servicestation 80 durchgeführten Schritte des erfindungsgemäßen Verfahrens durchzuführen.

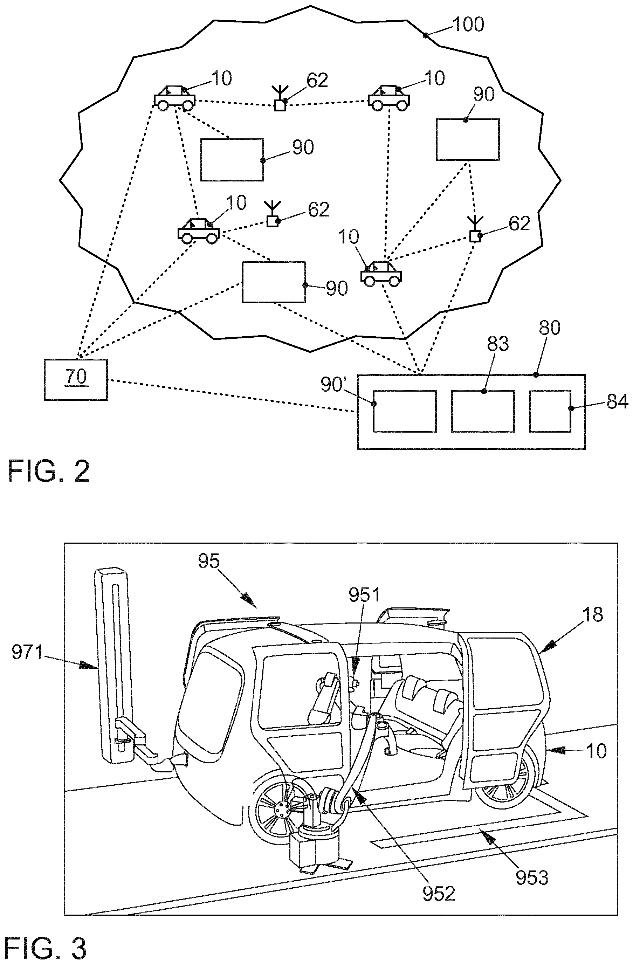

Figur 2 zeigt eine schematische Darstellung eines Betriebsbereichs 100 zur Durchführung des erfindungsgemäßen Verfahrens mittels des in Figur 1 dargestellten Systems. Der Betriebsbereich 100 erstreckt sich bevorzugt über ein urbanes Ballungsgebiet, beispielsweise eine Stadt oder ein Stadtzentrum. Innerhalb des Betriebsbereichs 100 befindet sich eine Vielzahl autonomer Fahrzeuge 10, von denen jedes eine grundlegende Konfiguration, wie mit Bezug zu Figur 1 erläutert, aufweist. Jedes der autonomen Fahrzeuge 10 ist dabei von Nutzern eines Carsharing-Dienstes abrufbar oder aber einem bestimmten Nutzer dauerhaft zugeordnet.

Der Betriebsbereich 100 weist eine Vielzahl erster Servicestationen 90 auf. Ferner sind ein Server 70 und eine zweite Servicestation 80 außerhalb des Betriebsbereichs 100 angeordnet. Der Server 70 und/oder die zweite Servicestation 80 könnten jedoch auch im Betriebsbereich 100 angeordnet sein. Die autonomen Fahrzeuge 10 sind zur Kommunikation untereinander, insbesondere mittels der ersten Kommunikationsmodule 20 und via Basisstationen 62 eines Mobilfunknetzes, ausgebildet. Die Fahrzeuge 10 sind ferner zur Kommunikation mit den ersten Servicestationen 90, mit der zweiten Servicestation 80 und mit dem Server 70 ausgebildet. Die Kommunikation erfolgt dabei direkt zwischen den Elementen oder über Basisstationen 62 eines Mobilfunknetzes, wie mit den gestrichelten Linien angedeutet. Darüber hinaus sind auch alle anderen Komponenten des in der Figur 2 dargestellten Systems zur direkten oder indirekten Kommunikation miteinander ausgebildet, wie beispielsweise die zweite Servicestation 80 mit dem Server 70 und den ersten Servicestationen 90 und der Server 70 mit den ersten Servicestationen 90, wie mit den gepunkteten Linien in der Figur 2 dargestellt.

Mit Bezug zu den Figuren 3 bis 6 werden Ausführungsformen der erfindungsgemäßen ersten Servicestation 90 sowie der darin enthaltene Servicemodule 95, 96, 97 erläutert.

Figur 3 zeigt eine schematische Darstellung eines ersten Servicemoduls 95, 95' zur Innenraumreinigung des Fahrzeugs 10. Um eine Innenraumreinigung des Fahrzeugs 10 durchzuführen, fährt dieses in das Servicemodul 95,95' ein, um dort auf einer Halteposition 953 zum Stehen zu kommen. Sobald das Fahrzeug 10 auf der Halteposition 953 zum Stehen kommt, öffnen sich die Fahrzeugtüren 18 des Fahrzeugs 10 selbsttätig. Dies ist bevorzugt durch die Steuereinheit 92 der ersten Servicestation 90, die Steuereinheit 82' der zweiten Servicestation 80 oder die Steuereinheit 40 des Fahrzeugs 10 veranlasst. Sobald die Fahrzeugtüren 18 geöffnet sind, werden ein erster Roboterarm 951 und ein zweiter Roboterarm 952 in das Fahrzeug eingeführt. An den Roboterarmen 951, 952 sind Werkzeuge zum Durchführen einer Innenraumreinigung angeordnet, insbesondere eine Staubsaugerdüse, ein Applikator zum Auftrag eines Reinigungsmittels und Mittel zur Polsterreinigung. Das in Figur 3 gezeigte erste Servicemodul 95, 95' weist ferner einen Ladeanschluss 971 zum Auffüllen eines elektrischen Energiespeichers 36 des Fahrzeugs 10 auf.

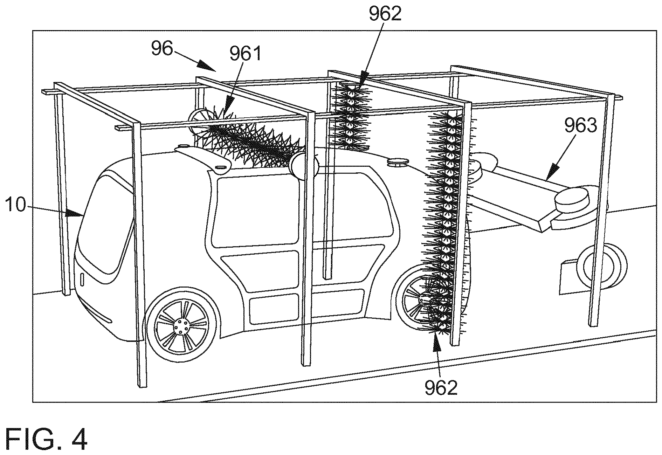

Figur 4 zeigt eine schematische Darstellung eines zweiten Servicemoduls 96, 96' zur Außenreinigung des Fahrzeugs 10. Das zweite Servicemodul 96, 96' entspricht weitgehend aus dem Stand der Technik bekannten automatischen Waschstraßen zur autonomen Außenreinigung eines Fahrzeugs 10. Das zweite Servicemodul 96, 96' weist insbesondere nicht dargestellte Mittel zum Auftrag eines Reinigungsfluides auf, wie beispielsweise Düsen zum Auftrag einer Seifenlaufe. Darüber hinaus weist das zweite Servicemodul 96, 96' eine rotierbare obere Waschbürste 961 und rotierbare seitliche Waschbürsten 962 zum Verteilen des Reinigungsfluides und zum Lösen des Schmutzes auf. Ferner weist das zweite Servicemodul 96, 96' einen Trockenfön 963 zum Trocknen des Fahrzeugs 10 auf.

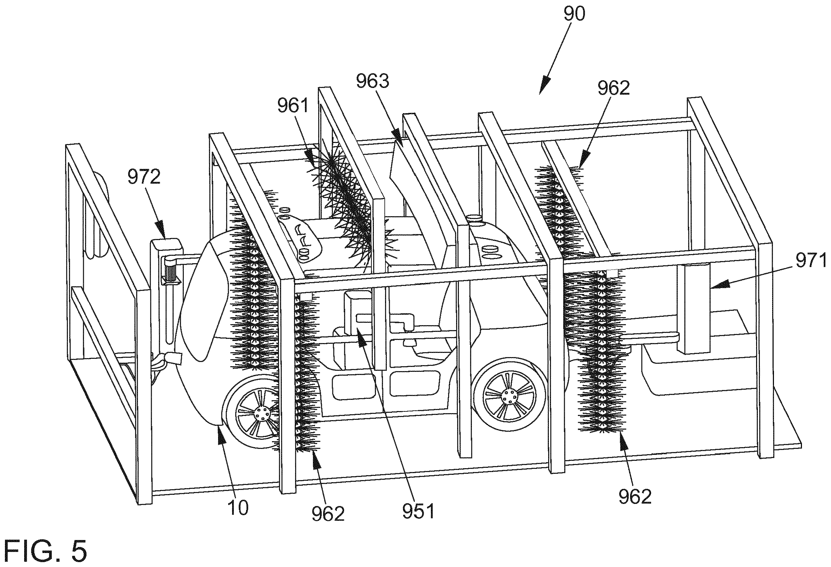

Figur 5 zeigt eine schematische Darstellung einer erfindungsgemäßen ersten Servicestation 90, aufweisend das erste Servicemodul 95 der Figur 3 und das zweite Servicemodul 96 der Figur 4 gemäß einer ersten Ausführungsform. In dieser ersten Ausführungsform der ersten Servicestation 90 sind das erste und zweite Servicemodul 95, 96 in einem gemeinsamen Bereich der ersten Servicestation 90 angeordnet. Somit ermöglicht die erste Servicestation 90 gemäß dieser ersten Ausführungsform das zumindest teilweise simultane Durchführen einer Außenreinigung und einer Innenreinigung an dem Fahrzeug 10. Die erste Servicestation 90 weist ferner ein erstes Kontrollmodul 98 und ein zweites Kontrollmodul 99 auf.

Ein Ablauf der autonom durchgeführten Serviceaktion in der ersten Servicestation 90 gemäß der ersten Ausführungsform beginnt mit der autonomen Einfahrt des Fahrzeugs 10 in die erste Servicestation 90. Diese Einfahrt wird bevorzugt durch das Fahrsystem 30 des Fahrzeugs 10 vermittelt, wobei die Steuereinheit 40 des Fahrzeugs 10 vermittels der Kommunikationsmodule 20, 91 mit der Steuereinheit 92 der ersten Servicestation 90 kommuniziert. Bei der Einfahrt des Fahrzeugs wird mittels eines nicht dargestellten ersten Kontrollmoduls 98 ein Verschmutzungsgrad des Fahrzeuginnenraums und der Fahrzeugoberfläche erfasst.

Sofern das Fahrzeug in der ersten Servicestation 90 eine Halteposition erreicht hat, öffnen sich die Türen 18 des Fahrzeugs 10 automatisch und ein mobiler Reinigungsroboter fährt autonom in den Innenraum oder wird in den Innenraum des Fahrzeugs 10 eingebracht. Sobald sich die Türen 18 des Fahrzeugs 10 schließen, startet der mobile Reinigungsroboter die Innenraumreinigung und startet eine Außenreinigung des Fahrzeugs 10 mittels des zweiten Servicemoduls 97, insbesondere mittels der Waschbürsten 961, 962 und dem Trockenfön 963.

Sobald die Außenreinigung und die Innenreinigung abgeschlossen sind, öffnen sich die Türen 18 und der mobile Reinigungsroboter fährt heraus oder wird herausgehoben. Gegebenenfalls erfolgt über nicht dargestellte Kameras oder andere Sensoren eines zweiten Kontrollmodules 99 eine Überprüfung der Innen- und/oder Außenreinigung des Fahrzeugs 10. Ist diese Überprüfung abschlossen, fährt das Fahrzeug 10 autonom aus der Servicestation 90.

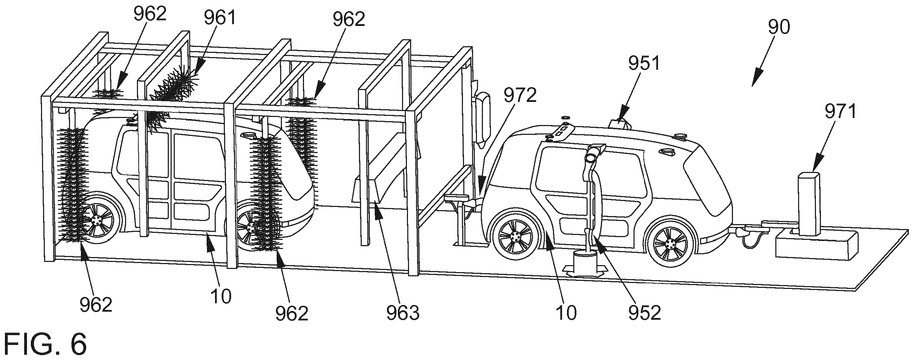

Figur 6 zeigt eine schematische Darstellung einer erfindungsgemäßen ersten Servicestation 90, aufweisend das erste Servicemodul 95 der Figur 3 und das zweite Servicemodul 96 der Figur 4 gemäß einer zweiten Ausführungsform. In dieser zweiten Ausführungsformen der ersten Servicestation 90 sind das erste Servicemodul 95 und das zweite Servicemodul 96 in verschiedenen Bereichen der ersten Servicestation 90 angeordnet. Die erste Servicestation 90 weist ferner ein erstes Kontrollmodul 98 und ein zweites Kontrollmodul 99 auf.

Ein Ablauf der autonom durchgeführten Serviceaktion in der ersten Servicestation 90 gemäß der zweiten Ausführungsform beginnt mit der autonomen Einfahrt des Fahrzeugs 10 in einen ersten Bereich der Servicestation 90. Diese Einfahrt wird bevorzugt durch das Fahrsystem 30 des Fahrzeugs 10 vermittelt, wobei die Steuereinheit 40 des Fahrzeugs 10 vermittels der Kommunikationsmodule 20, 91 mit der Steuereinheit 92 der ersten Servicestation 90 kommuniziert. Bei der Einfahrt des Fahrzeugs wird mittels eines nicht dargestellten ersten Kontrollmoduls 98 ein Verschmutzungsgrad des Fahrzeuginnenraums und der Fahrzeugoberfläche erfasst. Sofern das Fahrzeug 10 in dem ersten Bereich der ersten Servicestation 90 eine Halteposition erreicht hat, beginnt die Außenreinigung des Fahrzeugs 10 mittels dem im ersten Bereich angeordneten zweiten Servicemodul 96, insbesondere mittels der Waschbürsten 961, 962 und dem Trockenfön 963. Sobald die Außenreinigung abgeschlossen ist, erfolgt gegebenenfalls mittels nicht dargestellter Kameras oder Sensoren eine Überprüfung der Außenreinigung des Fahrzeugs 10. Sobald die Außenreinigung und/oder die Überprüfung abgeschlossen ist, fährt das Fahrzeug 10 autonom zu einem dem ersten Bereich nachgelagerten zweiten Bereich der ersten Servicestation 90 oder wird mittels eines Transportbands der ersten Servicestation 90 vom ersten zum zweiten Bereich transportiert.

Sofern das Fahrzeug im zweiten Bereich der ersten Servicestation 90 eine Halteposition erreicht hat, öffnen sich die Türen 18 des Fahrzeugs 10 automatisch und Roboterarme 951, 952 fahren autonom in den Innenraum ein. Mittels an den Roboterarmen 951, 952 befindlicher Werkzeuge beginnt eine Innenraumreinigung des Fahrzeugs 10. Gleichzeitig wird mittels des Ladeanschluss 971 ein elektrischer Energiespeicher 36 des Fahrzeugs 10 befüllt und wird mittels Wasserstoffbetankung 972 der Wasserstofftank des Fahrzeugs 10 gefüllt. Sobald die Innenreinigung abgeschlossen sind, werden die Roboterarme 951, 952 aus dem Fahrzeug 10 herausgefahren. Gegebenenfalls erfolgt über nicht dargestellte Kameras oder andere Sensoren eines zweiten Kontrollmodules 99 eine Überprüfung der Innenreinigung des Fahrzeugs 10. Ist diese Überprüfung abschlossen, werden die Befüllelemente von Ladeanschluss 971 und Wasserstoffbetankung 972 abgezogen und das Fahrzeug 10 fährt autonom aus der ersten Servicestation 90 heraus. In einer alternativen Ausführungsform ist der Trockenfön 963 in dem zweiten Bereich angeordnet und erfolgt ein Trocknen des Fahrzeugs 10 parallel zur Innenraumreinigung und zum Auffüllen der Energiespeicher 36.

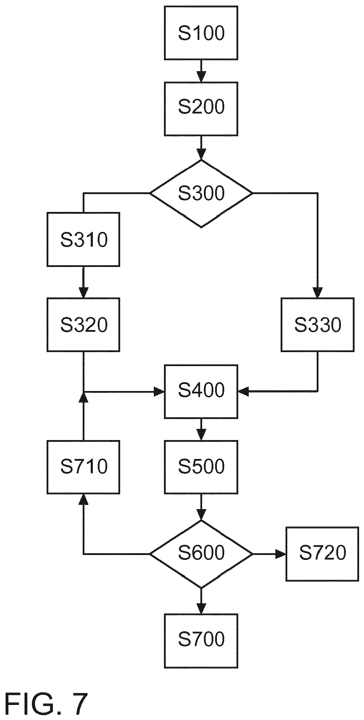

Figur 7 zeigt ein schematisches Ablaufdiagram eines Verfahrens zur autonomen Reinigung eines Fahrzeugs gemäß einer Durchführungsform des erfindungsgemäßen Verfahrens. In einem Schritt S100 trifft dabei ein autonomes Fahrzeug 10 an einer ersten oder zweiten Servicestation 80, 90 ein. In einem Schritt S200 werden erste Informationen zu einem Verschmutzungsgrad des Fahrzeugs 10 mittels eines ersten Kontrollmoduls 98 erfasst.

In einem Schritt S300 überprüft eine Steuereinheit 91, 91' der Servicestation 80, 90, ob weitere Informationen zu einem Verschmutzungsgrad des Fahrzeugs 10 von dem Fahrzeug 10 oder dem Server 70 empfangen worden sind. Wurden solche weiteren Informationen empfangen, werden im nächsten Schritt S310 die empfangenen weiteren Informationen in einen Arbeitsspeicher der Steuereinheit 91, 91' geladen. Im darauffolgenden Schritt S320 wird dann eine an dem Fahrzeug 10 durchzuführende Reinigung anhand der erfassten Informationen zu einem Verschmutzungsgrad des Fahrzeugs 10 und anhand der empfangenen weiteren Informationen zu einem Verschmutzungsgrad des Fahrzeugs 10 ermittelt. Ergibt der Schritt S300, dass keine weitere Informationen empfangen wurden, wird im nächsten Schritt S330 eine an dem Fahrzeug 10 durchzuführende Reinigung allein anhand der erfassten Informationen zu einem Verschmutzungsgrad des Fahrzeugs 10 ermittelt.

In einem Schritt S400 wird die zuvor im Schritt S320/S330 ermittelte Reinigung durch die Servicemodule 95, 96 der Servicestation 80, 90 durchgeführt. Insbesondere wird eine Innenraumreinigung und/oder eine Außenraumreinigung des Fahrzeugs 10 durchgeführt. Daraufhin werden in einem Schritt S500 mittels eines zweiten Kontrollmoduls 99 der Servicestation 80, 90 zweite Informationen zu einem Verschmutzungsgrad des Fahrzeugs 10 erfasst. In einem Schritt S600 werden die erfassten ersten Informationen und die erfassten zweiten Informationen miteinander verglichen und anhand des Vergleichs ein Effektivitätsmaß der durchgeführten Reinigung ermittelt. Ferner wird das ermittelte Effektivitätsmaß mit einem vorbestimmten Grenzwert für die Effektivität der durchgeführten Reinigung verglichen. Ferner erfolgt in Schritt S600 eine Überprüfung ob ein Zähler einen Wert aufweist, der ein vorbestimmten Maximalwert überschreitet.

Ergibt der Vergleich, dass das ermittelte Effektivitätsmaß gleich oder größer als der vorbestimmte Grenzwert ist, gilt die Reinigung als erfolgreich durchgeführt und das Verfahren endet in Schritt S700. Ergibt der Vergleich, dass das ermittelte Effektivitätsmaß geringer als der vorbestimmte Grenzwert ist und weist der Zähler einen Wert unterhalb des Maximalwerts auf, wird in Schritt S710 der Zähler um eins erhöht. Anschließend erfolgt eine erneute Durchführung der Schritte S400, S500 und S600. Ergibt der Vergleich, dass das ermittelte Effektivitätsmaß geringer als der vorbestimmte Grenzwert ist und weist der Zähler einen Wert oberhalb des Maximalwerts auf, endet das Verfahren in Schritt S720 mit Ausgabe einer Fehlermeldung.

### Bezugszeichenliste

- 10: Kraftfahrzeug
- 11: erster Sensoren
- 12: zweiter Sensor
- 13: dritter Sensor
- 18: Fahrzeugtür
- 20: erstes Kommunikationsmodul
- 21: Speicher
- 22: Transponder
- 30: erstes Fahrsystem
- 31: Speicher
- 32: CPU
- 35: elektrisches Fahrsystem
- 36: elektrischer Energiespeicher
- 37: Elektromotor
- 40: erste Steuereinheit
- 41: Speicher
- 42: CPU
- 51: vierter Sensoren
- 52: fünfter Sensor
- 53: sechster Sensor
- 61: GPS Satellit
- 62: Mobilfunkstation
- 63: anderes Fahrzeug
- 70: Server
- 71: viertes Kommunikationsmodul
- 72: vierte Steuereinheit
- 80: zweite Servicestation
- 81: drittes Kommunikationsmodul
- 83: viertes Servicemodul
- 84: Logistikmodul
- 90: erste Servicestation
- 91: zweites Kommunikationsmodul
- 92: zweite Steuereinheit
- 93: Speicher
- 94: CPU
- 95: erstes Servicemodul
- 951: Reinigungsroboter
- 952: Reinigungsroboter
- 953: Halteposition
- 96: zweites Servicemodul
- 961: obere Waschbürste
- 962: seitliche Waschbürste
- 963: Trockenfön
- 97: drittes Servicemodul
- 971: Ladeanschluss
- 972: Wasserstoffbetankung
- 98: erstes Kontrollmodul
- 99: zweites Kontrollmodul

## Patentansprüche

1. Servicestation (80, 90) zum autonomen Reinigen eines Fahrzeugs (10), das erste Sensoren und zweite Sensoren umfasst, aufweisend:
ein zum Durchführen einer Innenraumreinigung des Fahrzeugs (10) ausgebildetes erstes Servicemodul (95);
ein zum Durchführen einer Außenreinigung des Fahrzeugs (10) ausgebildetes zweites Servicemodul (96)';
ein den Servicemodulen (95, 96) vorgelagertes erstes Kontrollmodul (98) mit zumindest einem dritten Sensor, der zum Erfassen zumindest einer den Verschmutzungsgrad des Fahrzeugs (10) charakterisierenden Größe ausgebildet ist, und
ein den Servicemodulen (95, 96) nachgelagertes zweites Kontrollmodul (99) mit zumindest einem vierten Sensor, der zum Erfassen einer den Verschmutzungsgrad des Fahrzeugs (10) charakterisierenden Größe ausgebildet ist.

2. Servicestation (80, 90) nach Anspruch 1, wobei das erste Servicemodul (95) einen mobilen Roboter (951) oder ortsfesten Roboterarm (952) aufweist und Werkzeuge zur Innenraumreinigung des Fahrzeugs (10) an dem Roboter (951) oder an dem Roboterarm (952) angeordnet sind.

3. Servicestation (80, 90) nach Anspruch 2, wobei die Werkzeuge eine Staubsaugerdüse, eine Polsterbürste und/oder ein Applikator zum Auftrag von Reinigungsmittel aufweisen.

4. Servicestation (80, 90) nach einem der vorangehenden Ansprüche, wobei das zweite Servicemodul (96) einen Applikator zum Auftrag zumindest einer Reinigungsflüssigkeit, rotierende Bürsten (961, 962), schwenkbare Lappenträger und/oder einen Trockenfön (963) aufweist.

5. Servicestation (80, 90) nach einem der vorangehenden Ansprüche, wobei das erste und/oder zweite Kontrollmodul (98, 99) zumindest einen optischen Sensor zum Erfassen eines Verschmutzungsgrads einer Außenoberfläche des Fahrzeugs (10) aufweist.

6. Servicestation (80, 90) nach einem der vorangehenden Ansprüche, wobei das erste und/oder das zweite Kontrollmodul (98, 99) zumindest einen in das Innere des Fahrzeugs (10) einführbaren zweiten Roboterarm aufweist, an dem zumindest ein optischer Sensor, Feuchtigkeitssensor und/oder Luftgütesensor angeordnet ist.

7. Servicestation (80, 90) nach einem der vorangehenden Ansprüche, ferner aufweisend ein für die Kommunikation mit dem Fahrzeug (10) und/oder einem Server (70) eingerichtetes Kommunikationsmodul (81, 91) und/oder eine zum Ermitteln oder Anpassen einer an dem Fahrzeug (10) durchzuführenden Reinigung eingerichtete Steuereinheit (92, 92').

8. Verfahren einer Servicestation (80, 90) gemäß einem der Ansprüche 1 bis 7 zur autonomen Reinigung eines Fahrzeugs (10), aufweisend die Verfahrensschritte:
Erfassen von ersten Informationen zu einem Verschmutzungsgrad des Fahrzeugs (10) mittels des ersten Kontrollmoduls (98);
Ermitteln einer an dem Fahrzeug durchzuführenden Reinigung anhand der Informationen zum Verschmutzungsgrad des Fahrzeugs (10);
Durchführen der Reinigung mittels des ersten Servicemoduls (95) und/oder mittels des zweiten Servicemoduls (96); und
Erfassen von zweiten Informationen zu einem Verschmutzungsgrad des Fahrzeugs (10) mittels des zweiten Kontrollmoduls (99).

9. Verfahren nach Anspruch 8, ferner aufweisend die Verfahrensschritte:
Vergleich der zweiten Informationen mit den ersten Informationen oder mit einer zu der durchgeführten Reinigung vorbestimmten Zielvorgabe;
Ermitteln einer Effektivitätsmaßes der durchgeführten Reinigung anhand des Vergleichs;
Erneutes Durchführen der Reinigung mittels des ersten Servicemoduls (95) und/oder mittels des zweiten Servicemoduls (96) oder Ausgabe einer Fehlermeldung, sofern das Effektivitätsmaß einen vorbestimmten Grenzwert unterschreitet.

10. Verfahren nach Anspruch 8 oder 9, ferner aufweisend die Verfahrensschritte:
Empfangen von weiteren Informationen zu einem Verschmutzungsgrad des Fahrzeugs (10), wobei die weiteren Informationen von dem Fahrzeug (10) erfasste erste Informationen, auf einer Nutzereingabe basierende zweite Informationen und/oder von dem Server (70) bereitgestellte dritte Informationen aufweisen; und
Ermitteln einer an dem Fahrzeug (10) durchzuführenden Reinigung anhand der Informationen zum Verschmutzungsgrad des Fahrzeugs (10) und anhand der weiteren Informationen.

## Claims

1. Service station (80, 90) for autonomously cleaning a vehicle (10) which comprises first sensors and second sensors, having:
a first service module (95) designed to clean the interior of the vehicle (10);
a second service module (96) designed to clean the exterior of the vehicle (10);
a first control module (98) which is upstream of the service modules (95, 96) and has at least one third sensor which is designed to capture at least one variable characterizing the degree of soiling of the vehicle (10), and
a second control module (99) which is downstream of the service modules (95, 96) and has at least one fourth sensor which is designed to capture a variable characterizing the degree of soiling of the vehicle (10).

2. Service station (80, 90) according to Claim 1, wherein the first service module (95) has a mobile robot (951) or a stationary robot arm (952), and tools for cleaning the interior of the vehicle (10) are arranged on the robot (951) or on the robot arm (952) .

3. Service station (80, 90) according to Claim 2, wherein the tools have a vacuum cleaner nozzle, an upholstery brush and/or an applicator for applying cleaning agent.

4. Service station (80, 90) according to one of the preceding claims, wherein the second service module (96) has an applicator for applying at least one cleaning liquid, rotating brushes (961, 962), pivotable cloth carriers and/or a hot air dryer (963) .

5. Service station (80, 90) according to one of the preceding claims, wherein the first and/or second control module (98, 99) has at least one optical sensor for capturing a degree of soiling of an outer surface of the vehicle (10).

6. Service station (80, 90) according to one of the preceding claims, wherein the first and/or the second control module (98, 99) has at least one second robot arm which can be inserted into the interior of the vehicle (10) and on which at least one optical sensor, moisture sensor and/or air quality sensor is arranged.

7. Service station (80, 90) according to one of the preceding claims, also having a communication module (81, 91) configured to communicate with the vehicle (10) and/or with a server (70) and/or a control unit (92, 92') configured to determine or adapt cleaning to be performed on the vehicle (10).

8. Method of a service station (80, 90) according to one of Claims 1 to 7 for autonomously cleaning a vehicle (10), having the method steps of:
capturing first information relating to a degree of soiling of the vehicle (10) by means of the first control module (98);
determining cleaning to be performed on the vehicle on the basis of the information relating to the degree of soiling of the vehicle (10);
performing the cleaning by means of the first service module (95) and/or by means of the second service module (96); and
capturing second information relating to a degree of soiling of the vehicle (10) by means of the second control module (99).

9. Method according to Claim 8, also having the method steps of:
comparing the second information with the first information or with an objective predetermined for the cleaning which is performed;
determining a degree of effectiveness of the cleaning performed on the basis of the comparison;
performing the cleaning again by means of the first service module (95) and/or by means of the second service module (96) or outputting a fault message if the degree of effectiveness falls below a predetermined limit value.

10. Method according to Claim 8 or 9, also having the method steps of:
receiving further information relating to a degree of soiling of the vehicle (10), wherein the further information has first information captured by the vehicle (10), second information based on a user input and/or third information provided by the server (70); and
determining cleaning to be performed on the vehicle (10) on the basis of the information relating to the degree of soiling of the vehicle (10) and on the basis of the further information.

## Revendications

1. Station de service (80, 90) pour le nettoyage autonome d'un véhicule (10), qui comprend des premiers capteurs et deuxièmes capteurs, présentant :
un premier module de service (95) réalisé pour effectuer un nettoyage d'habitacle du véhicule (10) ;
un deuxième module de service (96) réalisé pour effectuer un nettoyage extérieur du véhicule (10) ;
un premier module de contrôle (98) placé en amont des modules de service (95, 96) et doté d'au moins un troisième capteur qui est réalisé pour détecter au moins une grandeur caractérisant le degré de salissure du véhicule (10), et
un deuxième module de contrôle (99) placé en aval des modules de service (95, 96) et doté d'au moins un quatrième capteur qui est réalisé pour détecter une grandeur caractérisant le degré de salissure du véhicule (10).

2. Station de service (80, 90) selon la revendication 1, dans laquelle le premier module de service (95) présente un robot mobile (951) ou un bras de robot stationnaire (952) et des outils pour le nettoyage d'habitacle du véhicule (10) sont disposés sur le robot (951) ou sur le bras de robot (952).

3. Station de service (80, 90) selon la revendication 2, dans laquelle les outils présentent une buse d'aspirateur, une brosse pour siège et/ou un applicateur pour appliquer un produit de nettoyage.

4. Station de service (80, 90) selon l'une quelconque des revendications précédentes, dans laquelle le deuxième module de service (96) présente un applicateur pour appliquer moins un liquide de nettoyage, des brosses rotatives (961, 962), des porte-chiffons pivotants et/ou un séchoir (963).

5. Station de service (80, 90) selon l'une quelconque des revendications précédentes, dans laquelle le premier et/ou le deuxième module de contrôle (98, 99) présente(nt) au moins un capteur optique pour détecter un degré de salissure d'une surface extérieure du véhicule (10).

6. Station de service (80, 90) selon l'une quelconque des revendications précédentes, dans laquelle le premier et/ou le deuxième module de contrôle (98, 99) présente(nt) au moins un deuxième bras de robot pouvant être introduit à l'intérieur du véhicule (10) et sur lequel sont disposés au moins un capteur optique, un capteur d'humidité et/ou un capteur de qualité de l'air.

7. Station de service (80, 90) selon l'une quelconque des revendications précédentes, présentant en outre un module de communication (81, 91) aménagé pour la communication avec le véhicule (10) et/ou un serveur (70), et/ou une unité de commande (92, 92') aménagée pour déterminer ou adapter un nettoyage à effectuer sur le véhicule (10).

8. Procédé d'une station de service (80, 90) selon l'une quelconque des revendications 1 à 7 pour le nettoyage autonome d'un véhicule (10), présentant les étapes de procédé consistant à :
détecter des premières informations concernant un degré de salissure du véhicule (10) au moyen du premier module de contrôle (98) ;
déterminer un nettoyage à effectuer sur le véhicule à l'aide des informations concernant le degré de salissure du véhicule (10) ;
effectuer le nettoyage au moyen du premier module de service (95) et/ou au moyen du deuxième module de service (96) ; et
détecter des deuxièmes informations concernant un degré de salissure du véhicule (10) au moyen du deuxième module de contrôle (99).

9. Procédé selon la revendication 8, présentant en outre les étapes de procédé consistant à :
comparer les deuxièmes informations avec les premières informations ou avec un objectif prédéterminé pour le nettoyage effectué ;
déterminer une mesure d'efficacité du nettoyage effectué à l'aide de la comparaison ;
effectuer à nouveau le nettoyage au moyen du premier module de service (95), et/ou au moyen du deuxième module de service (96) ou sortir un message d'erreur dans la mesure où la mesure d'efficacité est inférieure à une valeur seuil prédéterminée.

10. Procédé selon la revendication 8 ou 9, présentant en outre les étapes de procédé consistant à :
recevoir d'autres informations concernant un degré de salissure du véhicule (10), les autres informations présentant des premières informations détectées par le véhicule (10), des deuxièmes informations basées sur une entrée utilisateur et/ou des troisièmes informations fournies par le serveur (70) ; et
déterminer un nettoyage à effectuer sur le véhicule (10) à l'aide des informations concernant le degré de salissure du véhicule (10) et à l'aide des autres informations.
